# EUROPEAN PATENT APPLICATION

(11) **EP 3 485 759 A1**
(43) Date of publication of application: **22.05.2019**
(21) Application number: 18248073.1
(22) Date of filing: 05.09.2014
(51) Int. Cl.: A45C 13/42, G09F 3/18, G09F 3/02, G09F 3/14, G09F 3/20

(54) **ELECTRONIC BAGGAGE TAG**

(30) Priority: 11.09.2013 GB 201316180
(62) Divisional of application: 14789337.4
(71) Applicant: British Airways PLC, Harmondsworth, West Drayton UB7 0GB (GB)
(72) Inventor: JOBLING, Daniel, Harmondsworth, UB7 0GB (GB); THOMAS, Martin, Harmondsworth, UB7 0GB (GB); TATE, Harvey, Harmondsworth, UB7 0GB (GB)
(74) Representative: Cross, James Peter Archibald

(57) **Abstract**

An electronic baggage tag for attachment to, attached to, or incorporated in a baggage item, the tag having an electronic variable colour indicator configurable according to the area of origin or transit of the baggage item.

## Description

### Field of the Invention

The present invention relates to an identification apparatus and method, and particularly to an identification tag for baggage and the like, and for a method of configuring the tag.

### Background of the Invention

A conventional tag, for use in identification and tracking of baggage in airports and the like, comprises a self-adhesive strip that is printed with machine readable and human readable information which identifies a baggage item and the flight or journey on which the item is to be carried. The tag is typically printed by an operator at a check-in or baggage drop counter, and attached around a part of the baggage item to create a double-sided tag with machine-readable codes on both sides. The machine readable codes can then be read by an automated baggage transport system and used to look up further details on a database so as to enable the baggage item to be routed to the intended destination.

However, printed baggage tags may become damaged or may be positioned so that they cannot be read automatically. To overcome this problem, it has been proposed to replace paper baggage tags with radio-frequency-identification (RFID) tags, and some airports are now equipped with RFID readers to enable handling of RFID-tagged baggage. However, RFID tags cannot be read by conventional optical readers, as used in the majority of airports.

WO-A-2011/097454 (Vanguard Identification Systems) discloses an RFID tag that includes a programmable electronic flexible sheet display, so that a conventional bar code can also be displayed. The tag also carries a printable sheet. A customer may check in a bag online by scanning an online code and the baggage tag code using a cell phone, such that the customer's itinerary is linked to the baggage tag. At check-in at an airport, the tag, itinerary and customer ID are verified and the flight information is written to the tag.

WO-A-2011/93780 (Scandinavian Airlines) discloses an electronic luggage tag device with a presentation field arranged to display dynamic information and having a communication interface unit.

WO-A-2012/152745 (EC Solution) discloses a dual-display reusable electronic bag tag with a wireless communication interface and a sensor. Each display may have bar portions at opposite edges that are switchable between green and black. A power supply may be integrated in a suitcase incorporating the tag.

WO-A-01/37004 discloses a tag for attachment to luggage, adapted to transmit an identifiable signal, using Bluetooth® technology. The tag may notify the luggage owner when the luggage enters a specific area, such as a luggage conveyor, or may operate as a theft alarm.

EP-A-1744275 discloses an electronic baggage tag for creating and reviewing a checklist of items to be packed in a bag.

US-A-2009/040048 discloses an electronic baggage tag with a ZigBee® interface able to form a mesh network in order to locate other tags.

### Statement of the Invention

Aspects of the present invention include a baggage tag according to any one of the claims or clauses.

### Brief Description of the Drawings

Specific embodiments of the invention will now be described, purely by way of example, with reference to the accompanying drawings in which:
Figure 1a is a diagram of a baggage tag in a first embodiment of the invention.
Figure 1b shows dual electronic display screens of a prototype of the first embodiment.
Figure 2a is a diagram of the baggage tag of Figure 1a or 1b, removably mounted in a housing.
Figure 2b is a diagram of the baggage tag of Figure 1a or 1b, removably mounted on or in a baggage item.
Figure 3 is a diagram of the components of the baggage tag of the first embodiment.
Figure 4 is a flow diagram of a method of updating a baggage tag in a first embodiment of the invention.
Figure 5 is a flow diagram of a method of updating a baggage tag in a second embodiment of the invention.
Figure 6 is a diagram of an example of a computer system for use in embodiments of the invention.

### Detailed Description of Embodiments

### Electronic Baggage Tag

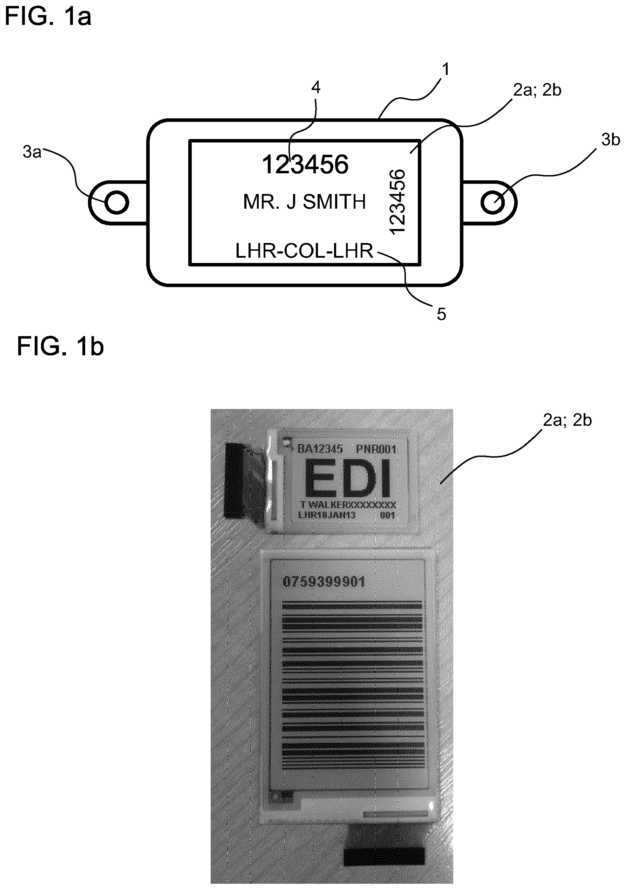

An electronic baggage tag 1 according to an embodiment of the invention will now be described with reference to Figures 1a to 3. The tag 1 is generally planar and has first and second display screens 2a, 2b on opposite main faces thereof so that the tag is readable from either side. As shown in Figure 1a, the display screens 2a, 2b may display a machine-readable code 4, such as a barcode, and human-readable information 5. The barcode 4 may be a one-dimensional barcode displayed twice, in orthogonal directions, to facilitate scanning. The one-dimensional barcode may comply with the IATA standard for baggage tag barcodes (currently Resolution 792 of the Passenger Services Conference Resolutions Manual).

Figure 1b shows a prototype in which each display screen 2a, 2b comprises two discrete sub-screens each displaying different information. However, it is preferred that a larger, single screen is used for each of the display screens 2a, 2b.

The display screens 2a, 2b preferably use non-volatile display technology so that they do not require constant power, and may have very low power consumption since power is only required to change the state of the display screens 2a, 2b. Examples of such display technology include electrophoretic ink (E Ink (RTM)). The tag 1 is preferably flexible, so as to avoid damage during handling. The E Ink (RTM) technology allows the display screens 2a, 2b to be flexible, while the other components of the tag, and the connections between them, may also be made flexible using known processes for flexible electronics.

Conventional baggage tags may have coloured edges, indicative of the area of origin or transit of the baggage. For example, green edges signify baggage transported within the European Union, but other colours may be used to indicate other areas. In the electronic baggage tag 1, this functionality may be replicated by including a variable colour display capability within one or both of the display screens 2a, 2b, such that the edges of the display screens 2a, 2b may show a colour appropriate to the information stored on the tag. Alternatively or additionally, separate colour display means may be provided at the edges of the tag 1, for example using variable colour LEDs or electroluminescent strips.

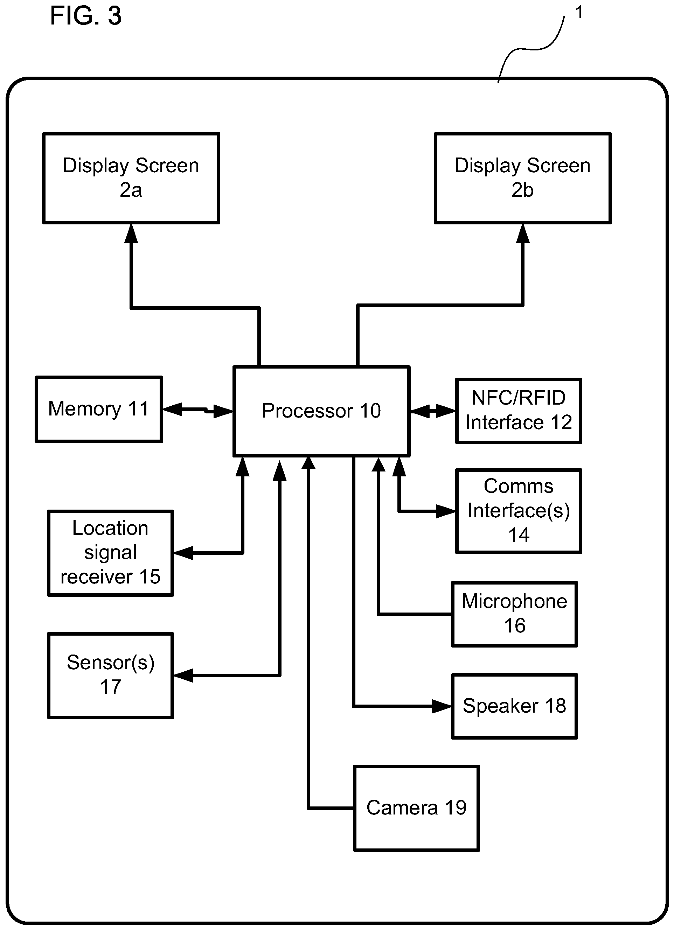

As shown in Figure 3, the display screens 2a, 2b are controlled by a processor 10 to display information and/or codes stored in a memory 11. A two-way near-field communication (NFC) or RFID (radio frequency identification) interface 12 may be provided to allow the contents of the memory 11 to be read and modified over an NFC connection, for example by means of an NFC-enabled mobile communication device or scanner. The NFC interface 12 may comply with the relevant standards as defined by the NFC Forum.

One or more communications interfaces 14 may be provided for enabling one or more communications links to the tag 1. The communications links may comprise one or more of:
- a short-range wireless link, such as Bluetooth®, Bluetooth® LE or Zigbee®.
- a wireless network data connection, for example using the GPRS, EDGE, 3G or 4G standards.

The tag 1 may include a location signal receiver 15, such as a GPS (Global Positioning System) or beacon signal receiver.

A microphone 16 and/or speaker 18 may be provided within the tag 1, or connected to the tag 1 via a wired or wireless connection; for example, the microphone 16 and/or speaker may be mounted in or on the baggage item 40. The microphone 16 and speaker 18 may be used to implement an acoustic modulated data communications interface.

The tag 1 may include one or more sensors 17 for sensing one or more conditions in the vicinity of, or within the baggage item 40, as described in more detail in the embodiments below.

The tag 1 may include a camera 19 for capturing a still or moving image of the vicinity of the tag 1.

The display screens 2a, 2b may be selectively activated so as to display information only when necessary or desirable. In the case of volatile display screens, this may significantly reduce power consumption. Also, passenger confidentiality may be improved by only displaying passenger information when necessary. Activation of the display screens 2a, 2b may be triggered by an external signal, emitted for example by baggage handling apparatus, and detected by the sensor 17, microphone 16 or comms interface 14, for example. The external signal may be protected from spoofing (e.g. scrambled or encrypted), for example by including a time-variant code that can be decrypted by the tag 1. Alternatively, activation may be triggered by an external condition, for example motion sensed by the sensor 17. Deactivation may be triggered by a timer within the tag, or absence of the trigger. It is not essential that the display screens 2a, 2b be completely activated and deactivated, only that selected information should be displayed or not displayed.

A power source, such as a rechargeable battery or capacitor, may be provided within the tag 1 and/or within the baggage item 40 for connection to the tag 1. The power source may be chargeable or rechargeable via an electrical or inductive connection. For example, the tag 1 may include an inductive coil positioned within the tag 1, within a loop for attachment of the tag 1 to the baggage item 40, or within the baggage item 40 for connection to the tag 1, as described below. Primary charging coils may be positioned in baggage handling areas or conveyors in order to charge the tag 1 in transit.

Alternatively or additionally, power may be provided by one or more:
- photovoltaic or photoelectric cells provided on the tag 1 and/or the baggage item 40;
- piezoelectric elements arranged to generate electricity from pressure or strain, and preferably arranged within the baggage item 40 for connection to the tag 1. For example, the piezoelectric element(s) may be positioned within a handle of the baggage item 40 for providing power from strain on the handle;
- kinetic charging devices provided in the tag 1 and/or the baggage item 40.
- acoustic transducers provided in the tag 1 and/or the baggage item 40, for converting sonic, subsonic or ultrasonic energy to electrical power. Advantageously, this may use the high noise levels in the baggage hold of an aircraft, and may even assist in damping that noise;
- linear or rotary generators, for example coupled to one or more wheels of the baggage item 40;
- one or more manually operated charging devices, such as a squeezable or rotatable charging device; and
- radiation-based chargers powered by radiation absorbed by the tag 1 or baggage item 40, particularly when in the baggage hold of an aircraft.
Preferably, one or more of the above power sources may be used to charge a rechargeable battery, cell or capacitor which in turn powers electrical or electronic components within the tag 1. However, in some cases where the power source is relatively constant, or constant power is not required by the components, the power source may supply power directly to the components.

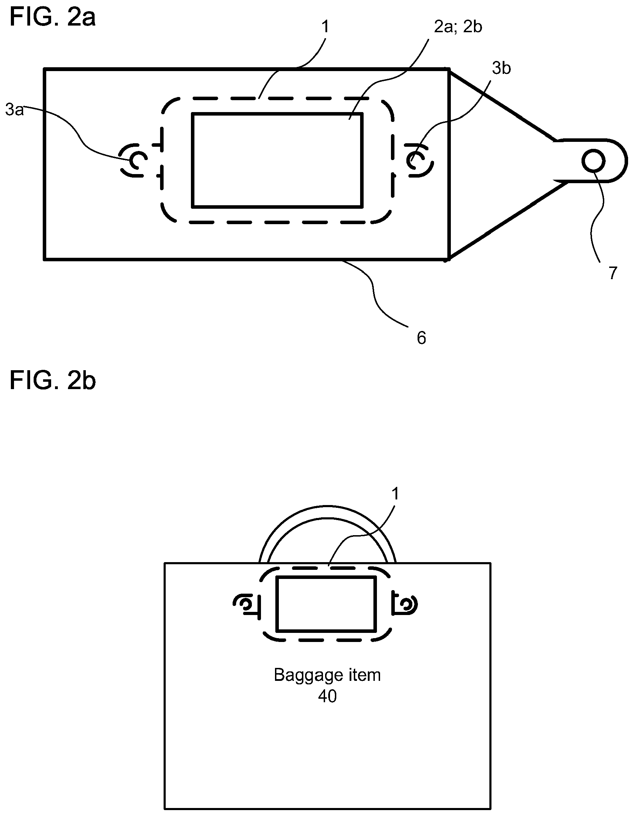

As shown in Figures 1a and 2a, the tag 1 has first and second attachment points 3a, 3b by which the tag 1 may be removably secured within a housing 6, for example by means of click or push-fit attachments. The housing 6 may be at least partially of transparent material, so that the display screens 2a, 2b are visible when the tag 1 is located within the housing 6. The housing 6 includes an attachment portion 7 for attachment to a baggage item. The housing 6 may be flexible, and may comprise a sleeve, or wrap-around casing.

The housing 6 may provide protection for the tag 1 during handling. Where an electrical power connection is provided in the tag 1, the housing 6 may protect the electrical power connection from the ingress of dirt and/or moisture. The housing 6 may include one or more photovoltaic or photoelectric cells arranged to provide power to the tag 1, for example through the attachment points 3a, 3b.

The housing 6 may be coloured and/or decorated, for example to indicate membership of a loyalty scheme. Hence, a plurality of housings 6 of different size, shape and/or appearance may be provided, each of which includes means for securing the tag 1 therein. The required housing 6 may be created by a 3D printer, for example using a file made available to a member of a loyalty scheme.

In an alternative embodiment, as shown in Figure 2b, the tag 1 may be removably mounted in or on a baggage item 40. In this way, the baggage item 40 may itself provide protection for the tag 1 during handling. In this case, the tag 1 need only have a single display screen 2a, 2b, since only the outer side of the tag 1 is visible. More than one tag 1 may be mounted on or in different sides of the baggage item 40, to increase the chance of at least one of the tags being scannable in transit.

The baggage item 40 may include one or more electrical components connectable to the tag 1, for example through the attachment points 3a, 3b.

Unlike a conventional paper tag, the tag 1 is a potentially valuable item, and can be re-used. It may therefore be locked to the baggage item 40 to prevent unauthorised removal, using a lock which may form part of the tag 1 and/or of the baggage item 40. The lock may be mechanically, electrically and/or electronically operated. In one embodiment, the lock may be electronically operated using an NFC interface 12 with a mobile device 30, as described below. The application 31 may enable unlocking of the tag 1 by a user interaction with the application 31.

Alternatively, the tag 1 may be integrated within, and not removable from, the baggage item 40.

### Tag Updating Method of First Embodiment

The tag 1 is intended to be re-used, so that the contents of the memory 11 and the display of the display screens 2a, 2b need to be updated to suit the current use of the tag 1, as described for example below.

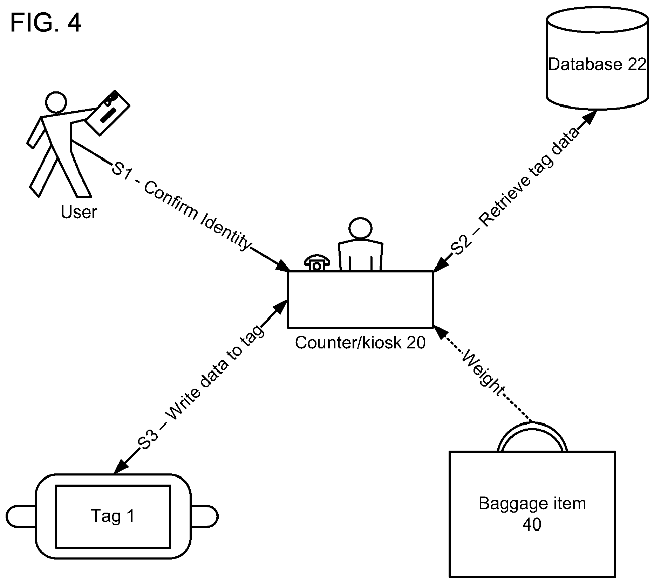

A first method of updating the tag 1, during check-in or baggage drop, will now be discussed with reference to Figure 4. This method may be performed automatically, for example at a check-in or baggage drop kiosk 20. Alternatively, at least some of the steps may be performed by an operator at a check-in or baggage drop counter 20.

First (step S1), the user confirms his or her identity, for example by presenting a document such as a boarding pass, loyalty scheme (e.g. frequent flyer) card and/or passport or other identity document. The document may be scanned automatically at the kiosk, and the user may be prompted to provide further details to confirm that he or she is the legitimate bearer of the document, for example by providing biometric data such as a fingerprint or retina scan, by providing a password, or by providing a payment card used to pay for the flight. These details are verified against records, for example stored on a database 22 and accessible by the operator's computer system or by the kiosk, so as to authenticate the user.

Next (step S2), if the user is authenticated, then the data to be written to the tag 1 is retrieved or generated by the computer system or kiosk, for example from the database 22 or another data source. The data may include the name of the user and details of the flight(s) on which the baggage associated with the tag 1 is to be transported. The data may include details of the baggage item 40 to which the tag 1 is to be attached, such as the weight of the item.

Finally (step S3), the retrieved data are written to the memory 11 of the tag 1, for example by bringing the tag 1 into proximity to an NFC interface of the kiosk or computer system, or via any other local communications interface described herein, and the tag 1 then updates the displays 2a and 2b to display the retrieved data as the barcode 4 and/or human-readable information 5.

The tag 1 may store a tag ID code that is communicable to external devices via the machine-readable code 4 and/or via the NFC interface 12 or other local communications interfaces described herein. The kiosk or computer system may read the tag ID code during the method described above, and associate the tag ID with the user's details on a database. Thus, when the tag ID is read by in the baggage handling system, the required routing information may be retrieved from the database. In this case, the machine-readable code 4 incorporating the tag ID code may be printed permanently on the tag 1, rather than displayed on the display screens 2a, 2b.

### Tag Updating Method of Second Embodiment

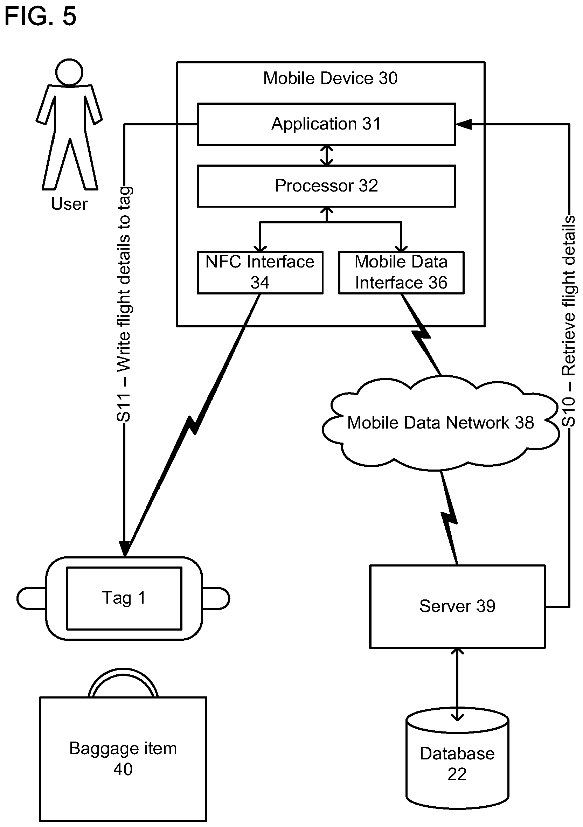

A second method of updating the tag 1, in which the user updates the tag using an NFC-enabled mobile communication device 30, will now be described with reference to Figure 5. The mobile device 30 includes: a processor 32, which may include a physical processor and an operating system running thereon, as well as other necessary components such as memory, enabling one or more applications 31 to be executed; an NFC interface 34 enabling bidirectional NFC communication with the NFC interface 12 of the tag 1, and a mobile data interface 36 for connection via a mobile data network 38 to a remote servicer 39, having access to services such as the database 22.

In this method, the user retrieves flight details (step S10) from the database 22 via the server 39 using the mobile device 30, for example by means of an application 31 running on the mobile device. One example of such an application is the 'British Airways app' or 'MyBA app' for iOS (RTM), Blackberry (RTM), Windows Phone™ and Android (RTM) operating systems. The application 31 allows registered users to retrieve flight details for their current bookings, and to download and use mobile boarding passes. In the present embodiment, the application 31 includes a function to send retrieved flight details to the tag 1.

Next (step S11), the user sends the retrieved flight details from the mobile device to the tag 1 via the NFC interface 12. The flight details are stored in the memory 11 and the displays 2a, 2b are updated to display the flight details.

As an alternative to the NFC interface 12, other local communications interfaces as described below may be used to transfer information to or from the tag 1. For example, information may be transferred in an audio signal captured by the microphone 16. The information may be broadcast over a wide area for updating any tags 1 in the vicinity of the broadcast, for example to update information relating to a flight. Alternatively or additionally, the audio signal could be emitted from a personal audio device, such as a radio, television apparatus, portable computer etc.

### Baggage Handling

In either of the above methods, the updated tag 1 is attached to an associated baggage item 40, and the tag 1 is then read during the baggage handling process either via an NFC interface or by scanning or reading one of the displays 2a, 2b, so that the baggage item may be routed appropriately. The baggage handling process may be automated in a baggage handling system including NFC or optical scanners, or handheld NFC or optical scanners may be provided to manual baggage handlers. The handheld NFC scanners may themselves comprise NFC-enabled mobile communication devices, which are arranged to retrieve the required handling data from a remote database by providing the tag ID code.

The above methods are described with reference to a single user and a single tag 1, but the methods are of course applicable to systems arranged to handle very large numbers of tags 1 and users, such as is required for a practical baggage handling system.

### Location Detection

In some embodiments, the tag 1 is arranged to report its location to a remote device, such as the mobile device 30 and/or server 39, using an architecture similar to that shown in Figure 5. The position of the tag 1 may be detected by the location signal receiver 15 and/or the communications interface(s) 14, for example by detecting the identity of local wireless networks or the strength of local cellular signals.

The tag 1 need not calculate its location, but may only report information that allows its location to be calculated or deduced remotely, for example at the server 39. In one example, images from the camera 19 and/or sounds detected by the microphone 16 may be used to deduce the location.

For at least some applications, the precise location need not be determined, but at least some location information may be inferred. For example, the sensor 17 may comprise a motion sensor capable of detecting handling of the baggage item 40. The type of handling may be used to infer the stage that the baggage item 40 has reached in a baggage handling process. Alternatively or additionally, rough or abnormal handling may be detected together with the location of such handling, allowing baggage handling performance to be monitored.

The sensor 17 may comprise a radiation sensor able to detect the level of background radiation, which may indicate the approximate altitude. The sensor 17 may include a pressure sensor, which may also indicate the approximate altitude. The microphone 16 may be used to record engine noise when the baggage item 40 is within an aircraft, which indicates that the baggage item is within the aircraft and may additionally be used to detect takeoff, landing and/or approximate altitude of the aircraft.

In one preferred embodiment, the database 22 stores location information relating to the baggage item(s) 40 or tag(s) 1 associated with the user, for example during an online check-in process or at the counter/kiosk 20. This location information is obtained by the mobile application 31, so that the user is kept informed of the location of the baggage item(s) 40 and/or tag(s) 1. Alternatively or additionally, this information may be provided through a social network account associated with the user, such as Twitter® or Facebook®, so as to allow sharing of the information with other social network users, such as family or friends.

The location information is preferably presented to the user in a form that is meaningful and relevant to the user. In one example, the location information may be presented relative to another location, such as the location of the mobile device 30, or the boarding gate or aircraft to be used for the user's flight. The user may be notified when a normal or abnormal relative location condition is detected, for example:
- the item 40 or tag 1 being more than a predetermined distance away from the mobile device 30, particularly if designated as hand baggage (an abnormal condition);
- the item 40 or tag 1 being loaded onto the aircraft relating to the user's flight (normal), or another aircraft not relating to the user's flight (abnormal); or
- the item 40 or tag 1 being more than a predetermined distance away from the boarding gate at less than a predetermined interval before the actual or schedule departure time (abnormal), for example to trigger a 'last call' notification to the user.

The location information may be presented to the user together with other information, such as a map of the locality (such as an airport terminal), or as an overlay on a view from the user's perspective, for example on a camera image taken by the mobile device, or on a real image viewed through a wearable device, such as Google Glass®.

Alternatively or additionally, an alarm may be triggered at the item 40 or tag 1 if an abnormal location situation is detected.

The item 40 or tag 1 may detect the presence of other items 40 or tags 1 have a predetermined group association, for example as a group checked in by a single user or group of users, where the items 40 or tags 1 are designated as being transported together. The presence of other items 40 or tags 1 within the group may be detected using local communications links as mentioned above, for example Bluetooth®, Zigbee® or acoustic links. The items 40 or tags 1 within a designated group may form a local (e.g. mesh) network using the local communication links, which is used to detect the presence of each item 40 or tag 1 within the group. If one or more of the items 40 or tags 1 is detected as not present or no longer present in the local network, an abnormal location condition may be reported.

Where a plurality of items 40 or tags 1 are capable of local communication links with each other, only one of the items 40 or tags 1 needs to be capable of remote (e.g. wireless network) communication in order to provide remote reporting; the other items 40 or tags 1 need only be capable of local communication links. Hence, there may be provided two types of tag 1 or item 40: a 'hub' or 'master' type capable of local and remote communication, and a 'spoke' or 'slave' type capable of only local communication, either with others of the same type, or with the 'hub' or 'master' type. The 'hub' or 'master' type may act as a relay to the remote communication link of data provided from the 'spoke' or 'slave' type over the local communication link. However, this arrangement is vulnerable to theft or loss of the 'hub' or 'master' type.

The location information may be used to report on or track the location of the baggage item 40 or tag 1 before and/or after the flight, including reporting the complete itinerary of the baggage item 40 or tag 1 between defined start and end points. These start and end points may be indicated by the user, determined from information relating to the user (such as home and holiday address) or determined by sensing the condition of the item 40 or tag 1. For example, location reporting may be activated and/or deactivated by a motion or light sensor in the tag 1 or item 40. Typically, baggage items 40 or items will be kept in storage when not in use, and will therefore be stationary and possibly in a dark environment. A transition to a state of motion and/or a light environment may indicate that the item 40 or tag 1 is in use. A transition back to a prolonged period of stasis and/or dark may indicate that the item 40 or tag 1 is no longer in use.

The itinerary may be recorded on the database 22 and used for statistical reporting of passenger journeys, without compromising passenger confidentiality. Alternatively or additionally, the itinerary may be presented to the user as a record of their holiday or trip, for example overlaid with a mapping service such as Google® Maps.

The location information or other information sensed by the baggage tag 1 or item 40 may be used to provide information on aircraft status, such as conditions in the hold of an aircraft.

### Contents Sensing

The contents of the baggage item 40 may be detected by the tag 1 using the RFID interface 12 and/or the sensor(s) 17. For example, where the contents items are tagged using RFID tags, the tag 1 or baggage item 40 may interrogate the RFID tags and determine what tagged items are present. Alternatively or additionally, the sensor(s) 17 may be able to detect the presence of certain substances, such as liquids, metals or narcotics, for example using electromagnetic (e.g. millimeter wave) or optical sensing.

The determined items may be reported to a remote device, such as the mobile device 30 and/or the server 39, where they are reported to the user or compared to a predetermined list of items. For example, the mobile application 31 may allow the user to specify a list of items to be packed within the baggage item 40, and may then verify whether the specified list of items have been detected in the baggage item 40.

Additionally, the mobile application 31 may enable online purchase of missing items for delivery to the user, for example at a specified destination address or at a transit point, such as the departure area of an airport.

Another application of contents sensing is in the detection of prohibited items within the baggage item 40. For example, the user may not be aware that certain items are prohibited from hand baggage on an aircraft, but the presence of a prohibited item in the baggage item 40 may be detected automatically and indicated to the user, so that the prohibited item may be removed before a security check. Another problem is that prohibited items may be 'planted' in the baggage item 40 without the user's knowledge; automated detection of such items may alert the user to this and thereby avoid legal penalties.

The tag 1 or baggage item 40 may be interrogated at a security checkpoint, for example by local communication, to obtain information about the contents of the baggage item 40. This information may be used to improve the efficiency of a security check, since an absence of prohibited items may be confirmed by the tag 1 or baggage item 40. This in turn may encourage usage of such tags 1 or baggage items 40, since the loss of privacy of contents reporting is balanced by the convenience of streamlined security checks.

Alternatively or additionally, the sensor(s) 17 may sense the weight of the baggage item 40, for example by means of a strain gauge in a handle, wheel or stand of the baggage item. The weight may be reported to the user or to a security checkpoint to determine whether or not the baggage item 40 is within a weight limit.

### Computer System

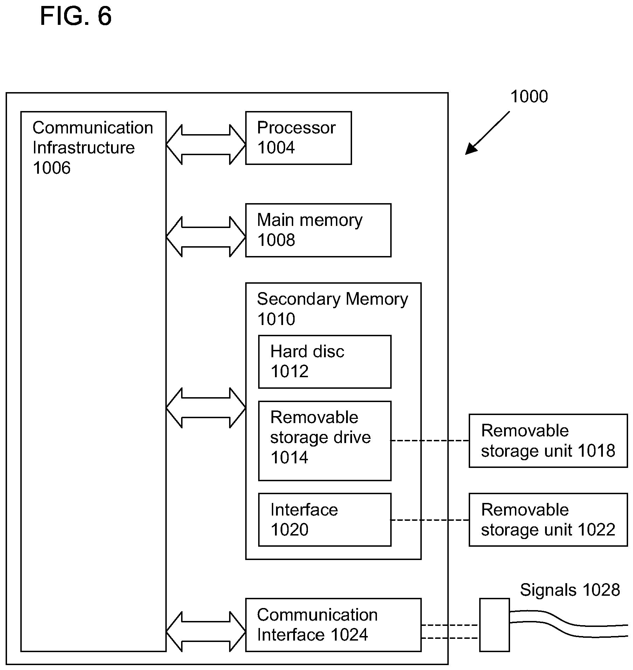

The computer system, kiosk and/or mobile device described herein may be a computer system 600 as shown in Figure 6. Embodiments of the present invention may be implemented as programmable code for execution by the computer system 600. Various embodiments of the invention are described in terms of this example computer system 600. After reading this description, it will become apparent to a person skilled in the art how to implement the invention using other computer systems and/or computer architectures.

Computer system 600 includes one or more processors, such as processor 604. Processor 604 may be any type of processor, including but not limited to a special purpose or a general-purpose digital signal processor. Processor 604 is connected to a communication infrastructure 606 (for example, a bus or network). Computer system 600 also includes a main memory 608, preferably random access memory (RAM), and may also include a secondary memory 610. Secondary memory 610 may include, for example, a hard disk drive 612 and/or a removable storage drive 614, representing a floppy disk drive, a magnetic tape drive, an optical disk drive, etc. Removable storage drive 614 reads from and/or writes to a removable storage unit 618 in a well-known manner. Removable storage unit 618 represents a floppy disk, magnetic tape, optical disk, etc., which is read by and written to by removable storage drive 614. As will be appreciated, removable storage unit 618 includes a computer usable storage medium having stored therein computer software and/or data.

In alternative implementations, secondary memory 610 may include other similar means for allowing computer programs or other instructions to be loaded into computer system 600. Such means may include, for example, a removable storage unit 622 and an interface 620. Examples of such means may include a program cartridge and cartridge interface (such as that previously found in video game devices), a removable memory chip (such as an EPROM, or PROM, or flash memory) and associated socket, and other removable storage units 622 and interfaces 620 which allow software and data to be transferred from removable storage unit 622 to computer system 600. Alternatively, the program may be executed and/or the data accessed from the removable storage unit 622, using the processor 604 of the computer system 600.

Computer system 600 may also include a communication interface 624. Communication interface 624 allows software and data to be transferred between computer system 600 and external devices. Examples of communication interface 624 may include a modem, a network interface (such as an Ethernet card), a communication port, a Personal Computer Memory Card International Association (PCMCIA) slot and card, etc. Software and data transferred via communication interface 624 are in the form of signals 628, which may be electronic, electromagnetic, optical, or other signals capable of being received by communication interface 624. These signals 628 are provided to communication interface 624 via a communication path 626. Communication path 626 carries signals 628 and may be implemented using wire or cable, fibre optics, a phone line, a wireless link, a cellular phone link, a radio frequency link, or any other suitable communication channel. For instance, communication path 626 may be implemented using a combination of channels.

The terms "computer program medium" and "computer usable medium" are used generally to refer to media such as removable storage drive 614, a hard disk installed in hard disk drive 612, and signals 628. These computer program products are means for providing software to computer system 600. However, these terms may also include signals (such as electrical, optical or electromagnetic signals) that embody the computer program disclosed herein.

Computer programs (also called computer control logic) are stored in main memory 608 and/or secondary memory 610. Computer programs may also be received via communication interface 624. Such computer programs, when executed, enable computer system 600 to implement the present invention as discussed herein. Accordingly, such computer programs represent controllers of computer system 600. Where the invention is implemented using software, the software may be stored in a computer program product and loaded into computer system 600 using removable storage drive 614, hard disk drive 612, or communication interface 624, to provide some examples.

In alternative embodiments, the invention can be implemented as control logic in hardware, firmware, or software or any combination thereof. The apparatus may be implemented by dedicated hardware, such as one or more application-specific integrated circuits (ASICs) or appropriately connected discrete logic gates. A suitable hardware description language can be used to implement the method described herein with dedicated hardware.

### Alternative Embodiments

The embodiments described above are illustrative of rather than limiting to the present invention. Alternative embodiments apparent on reading the above description may nevertheless fall within the scope of the invention.

Alternative statements of the invention are recited below as numbered clauses:
**1.** An electronic baggage tag for attachment to, attached to, or incorporated in a baggage item, the tag including a sensor for sensing an external trigger and an electronic display screen arranged selectively to display baggage tag codes and/or information in response to the external trigger.
**2.** The tag of clause 1, wherein the external trigger comprises an electromagnetic, optical, or acoustic signal.
**3.** The tag of clause 2, wherein the signal is protected from spoofing.
**4.** The tag of clause 1, wherein the external trigger comprises an external condition.
**5.** The tag of clause 4, wherein the sensor comprises a motion sensor.
**6.** The tag of any one of clauses 1 to 5, including a timer arranged to deactivate the display of baggage tag codes and/or information.
**7.** An electronic baggage tag for attachment to, attached to, or incorporated in a baggage item, the tag having a power source comprising one or more of piezoelectric, kinetic, acoustic or radiation-based power sources.
**8.** The tag of clause 7, including a rechargeable power supply chargeable by the power source.
**9.** The tag of clause 7 or 8, wherein the power source is a piezoelectric power source connected to a handle of the baggage item for providing power from strain on the handle.
**10.** The tag of clause 7 or 8, wherein the power source is an acoustic power source including an acoustic transducer provided in the tag and/or baggage item.
**11.** The tag of clause 7 or 8, wherein the power source is a radiation-based power source powered by radiation absorbed by the tag and/or baggage item.
**12.** An electronic baggage tag for attachment to, attached to, or incorporated in a baggage item, the tag having an electronic variable colour indicator configurable according to the area of origin or transit of the baggage item.
**13.** The tag of clause 12, wherein the colour indicator is provided on one or more edges of the tag.
**14.** The tag of clause 12 or 13, wherein the colour indicator is light-emissive.
**15.** The tag of clause 14, wherein the colour indicator comprises one or more LEDs.
**16.** The tag of clause 14, wherein the colour indicator comprises one or more electroluminescent devices.
**17.** The tag of any one of clauses 12 to 16, wherein the colour indicator forms part of an electronic display screen for displaying baggage tag codes and/or information.
**18.** The tag of any one of clauses 12 to 16, wherein the tag comprises at least one electronic display screen for displaying baggage tag codes and/or information, and the variable colour indicator is separate from the display screen.
**19.** The tag of any preceding clause, including a lock for locking the tag to the baggage item.
**20.** The tag of clause 19, wherein the lock is operable in response to a signal from an external device.
**21.** An electronic baggage tag for attachment to, attached to, or incorporated in a baggage item, the tag including means for capturing information relating to the local environment of the baggage item, and means for reporting the information to a remote service.
**22.** The tag of clause 21, wherein the means for capturing comprises one or more of a camera, a microphone, a motion sensor, a radiation sensor and a pressure sensor.
**23.** The tag of clause 21, wherein the means for capturing comprises means for detecting the presence of one or more wireless networks.
**24.** An electronic baggage tag for attachment to, attached to, or incorporated in a baggage item, the tag including means for sensing the contents of the baggage item, and means for providing an output responsive to said sensing.
**25.** The tag of clause 24, wherein the means for sensing comprises means for identifying one or more tags attached to the contents of the baggage item.
**26.** The tag of clause 24 or 25, wherein the means for sensing comprises means for detecting one or more substances in the contents of the baggage item.
**27.** The tag of any one of clauses 24 to 26, wherein the means for sensing comprises means for sensing the weight of the contents of the baggage item.
**28.** The tag of any one of clauses 24 to 27, wherein the output comprises a signal for reception by a remote device.
**29.** An electronic baggage tag for attachment to, attached to, or incorporated in a baggage item, the tag including a remote communications interface for communication over a remote communications network, and a local communications interface for communication over a local communications link, the tag arranged to relay, to the remote communications network, data received over the local communications link.
**30.** A set of electronic baggage tags comprising at least a first electronic baggage tag according to clause 29 and a second electronic baggage tag including a local communications interface for communication over the local communications link to the first electronic baggage tag, for relaying data to the remote communications network.
**31.** A method of use of the tag of clause 28, comprising receiving the signal at a baggage security checkpoint or mobile device, which thereby confirms the contents of the baggage item.
**32.** A method of use of the electronic baggage tag of clause 21 or clause 22, comprising, at the remote service, receiving the captured information and deriving at least an approximate location of the tag from said captured information.
**33.** The method of clause 32, further comprising detecting a location status of the tag, and reporting the location status to a user.
**34.** A method of configuring a baggage tag having a communication interface, the method comprising:
   **a.** retrieving data relating to a journey; and
   **b.** transferring the data to the baggage tag over the communication interface such that the data is readable from the baggage tag;
   wherein the communication interface comprises an audio signal interface.
**35.** The method of clause 34, wherein the data is retrieved using a mobile communication device, and is transferred from the mobile communication device to the baggage tag using a speaker of the mobile communication device.
**36.** The method of clause 34 or 35, wherein a user of the baggage tag is authenticated prior to retrieval of the data relating to the journey.
**37.** The method of clause 34 or 35, wherein the data is broadcast as an audio signal.
**38.** The method of any one of clauses 34 to 37, wherein the baggage tag comprises an electronic display arranged to display the data.
**39.** The method of clause 38, wherein the baggage tag is as described in any one of clauses 1 to 29.
**40.** A computer program product comprising program code arranged to execute the method of any one of clauses 31 to 39.
**41.** A baggage tag substantially as herein described with reference to and/or as shown in the accompanying drawings.
**42.** A method substantially as herein described with reference to and/or as shown in the accompanying drawings.

## Claims

1. An electronic baggage tag for attachment to, attached to, or incorporated in a baggage item, the tag having an electronic variable colour indicator configurable according to the area of origin or transit of the baggage item.

2. The tag of claim 1, wherein the colour indicator is provided on one or more edges of the tag.

3. The tag of claim 1 or 2, wherein the colour indicator is light-emissive.

4. The tag of claim 3, wherein the colour indicator comprises one or more LEDs.

5. The tag of claim 3, wherein the colour indicator comprises one or more electroluminescent devices.

6. The tag of any one of claims 1 to 5, wherein the colour indicator forms part of an electronic display screen for displaying baggage tag codes and/or information.

7. The tag of any one of claims 1 to 5, wherein the tag comprises at least one electronic display screen for displaying baggage tag codes and/or information, and the variable colour indicator is separate from the display screen.

8. The tag of any preceding claim, including a lock for locking the tag to the baggage item.

9. The tag of claim 8, wherein the lock is operable in response to a signal from an external device.
